# EUROPEAN PATENT SPECIFICATION

(11) **EP 1 487 153 B1**
(45) Date of publication and mention of the grant of the patent: **07.09.2016**
(21) Application number: 03013151.0
(22) Date of filing: 11.06.2003
(51) Int. Cl.: H04L 12/28

(54) **System for transmitting signals between different interfaces of a mobile terminal**
System zur Übertragung von Signalen zwischen unterschiedlichen Schnittstellen eines mobilen Endgeräts
Système de transmission de signaux entre differentes interfaces d'un terminal mobile

(43) Date of publication of application: 15.12.2004
(73) Proprietor: Sony Mobile Communications Inc, Tokyo 140-0002 (JP)
(72) Inventor: Kulish, Oleksiy, 85609 Aschheim-Dornach (DE)
(74) Representative: Banzer, Hans-Jörg

(56) References cited:
- US-A1- 2002 118 657
- US-A1- 2002 150 120
- US-A1- 2003 013 411

## Description

The invention relates to a system of transmitting signals between different interfaces of a mobile terminal according to claim 1.

In the situation when data should be transmitted from a device A having a port a (e.g. a serial port) to a device B having an incompatible port b (e.g. a Bluetooth interface), then the inconsistency of the devices does not allow performing this operation. A connection for transmitting data between different interfaces like serial port, USB, IrDA or Bluetooth is therefore needed.

A remote control interface for converting radio remote control signals into infrared remote control signals is revealed in document WO 01/73720 A1. Hereby, the remote control interface comprises a Bluetooth transceiver for receiving commands from a Bluetooth enabled device such as a mobile phone, a processor for converting received commands from the phone into infrared codes for controlling a TV or the like and an infrared transmitter for transmitting the converted signals.

The disadvantage of the system is the limited application, as only Bluetooth signals can be converted into infrared signals. A bi-directional conversion or a conversion of other signals is not possible.

A method and an apparatus for interfacing between a radio frequency unit and a modem is described in US 2002/0118735 A1. The document reveals an interface apparatus for connecting a mobile station modem to a radio frequency unit including a bus interface operably connected to said radio frequency unit including a plurality of bi-directional serial data connections for transmitting data for transmission in a first direction to said mobile station mode from said radio frequency unit and for receiving data at said radio frequency unit from said mobile station modem.

Hereby, data are transmitted between a Bluetooth module and a GSM modem, but a possibility for transmitting data between different communication standards is not revealed.

US 2002/0150120 A1 describes a dual interface wireless internet packet (IP) communication device. A communication interface device includes a wireless IP transceiver and a flash memory card electrically connected to the transceiver. A universal serial bus (USB) connector is also electrically connected to the transceiver.

US 2002/0118657 describes a system according to the preamble of claim 1.

It is therefore the object of the present invention to provide a practical and simple system serving as an interface between different ports such as USB, serial port, infrared or Bluetooth and enabling bi-direction transmission of data between each of these ports.

This object is achieved by a system as defined in claim 1. The dependent claims define embodiments.

According to the present invention, a system of transmitting signals between different interfaces of a mobile terminal is revealed comprising a first interface module for processing a first and a second type of signals and a second interface module for processing a third and said second type of signals.

Hereby, the system comprises a router module with a router for receiving signals of the second type from the first interface or from the second interface module and for transmitting the signals of the second type through the second interface module or to the first interface module according to commands received from a user interface means.

As a mobile terminal with different interfaces, which are already implemented, is used, the present invention is practical and the technical implementation according the invention is very simple.
Further, by using a router for transmitting signals between different interfaces of the mobile terminal and by using a user interface means for submitting commands to the router in order to cause the router to transmit signals between two interfaces chosen of a plurality of interfaces, it is possible to transmit data between different incompatible ports and to select the direction and the type of interfaces between which data should be transmitted.

Advantageously the first interface module comprises a connector serving as a port for transmitting signals of the first type to a first external device or for receiving signals of the first type from a first external device.

Further, advantageously the first interface module comprises a driver for transmitting signals of the first type to the connector or for receiving signals of the first type from the connector and for transmitting signals of the second type to the router of the router module or for receiving signals of the second type from the router of the router module.

In a preferred embodiment the second interface module comprises a transmitting means for transmitting signals of a third type to a second external device or for receiving signals of a third type from a second external device.

According to the invention, the second interface module comprises a host controller interface HCI for transmitting signals of the second type as signals of the third type to the transmitting means or for receiving signals of the third type from the transmitting means and for transmitting signals of the second type to the router of the router module or for receiving signals of the second type from the router of the router module.

Advantageously the second interface module processes Bluetooth signals.

The first interface module can process serial signals.

The first interface module can process USB signals.

Preferably the first interface module processes infrared signals.

Further, preferably the first interface module processes parallel signals.

Embodiments of the invention will not be described, by way of example only, with reference to the accompanying drawing in which:
Fig. 1 is a block diagram showing schematically the elements of the system and
Fig 2 is a block diagram showing the use of a mobile terminal according to the present invention.

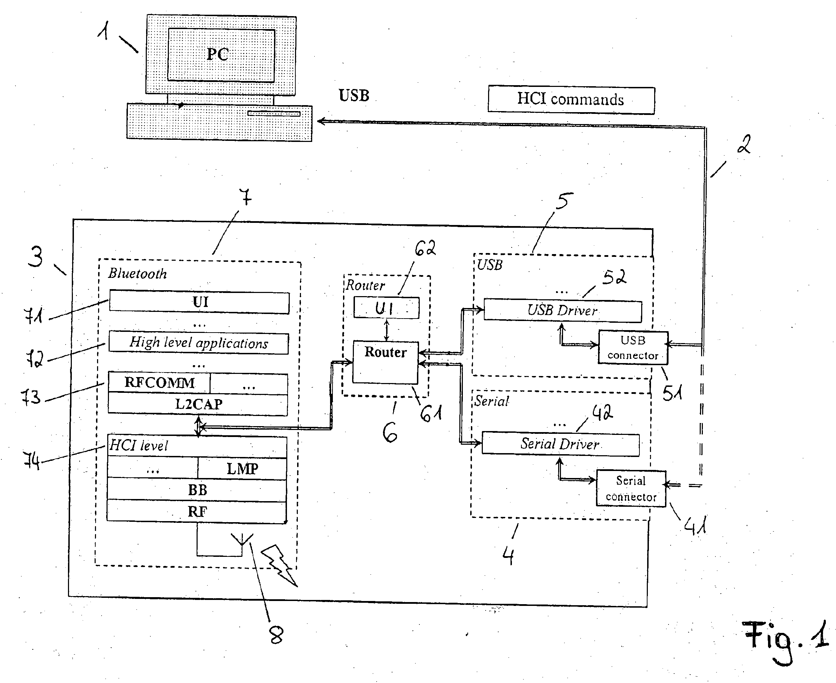

Fig. 1 shows a system of transmitting signals between different interfaces of a mobile terminal according to the present invention.
A mobile terminal 3, for example a mobile phone, comprises a serial interface module 4, a USB interface module 5 and a Bluetooth interface module 7 for receiving, processing and sending serial, USB or Bluetooth specific data, respectively. The mobile terminal 3 may comprise further interface modules (not shown in the figure) like for example parallel or infrared.

The USB interface module 5 comprises a USB connector 51 serving as an USB port for being connected to an external device 1, e.g. a PC, and for receiving USB signals from the external device 1 over a connection 2 or for transmitting USB signals to an external device 1 over said connection 2. Accordingly, the serial interface module 4 comprises a serial connector 41 serving as a serial port for transmitting serial signals to or for receiving serial signals from an external device 1 using the connection 2. Hereby, the connection 2 may be a serial cable or a USB cable.
Accordingly, in case of using an infrared interface module, the connector is realised as an infrared interface and the data are transmitted to or received from the external device 1 via wireless infrared signals.

In addition, the USB interface module 5 comprises a USB driver 52 connected to the USB connector 51 and able to convert received data and to direct the converted data to other modules, interfaces or layers. Accordingly, the serial interface module 4 comprises a serial driver 42 for receiving converting an re-directing signals.

The Bluetooth interface module 7 comprises different layers for running several protocols. Implemented in the host controller interface level 74 (HCI level) are the link manager protocol (LMP), the base band (BB) and the radio frequency (RF) which is the radio part of Bluetooth. The radio signals are received by an antenna 8 connected to the HCI level 74.
The low-level 73 comprises the RFCOMM for the simulation of a serial port via RF, the L2CAP serving as logical link control and adaptation protocol and other protocols for serving as a basis and connection for higher protocol-layers such as high level applications 72 or the Bluetooth user interface (UI) 71.

The USB driver 52, the serial driver 42 and the HCI level 74 of the Bluetooth interface module 7 are connected by a router module 6. The router module comprises a router 61 for re-directing data between the different interface modules 4, 5 and 7 and a user interface 62 for receiving commands between which interface modules data should be directed and for submitting these commands to the router 61.

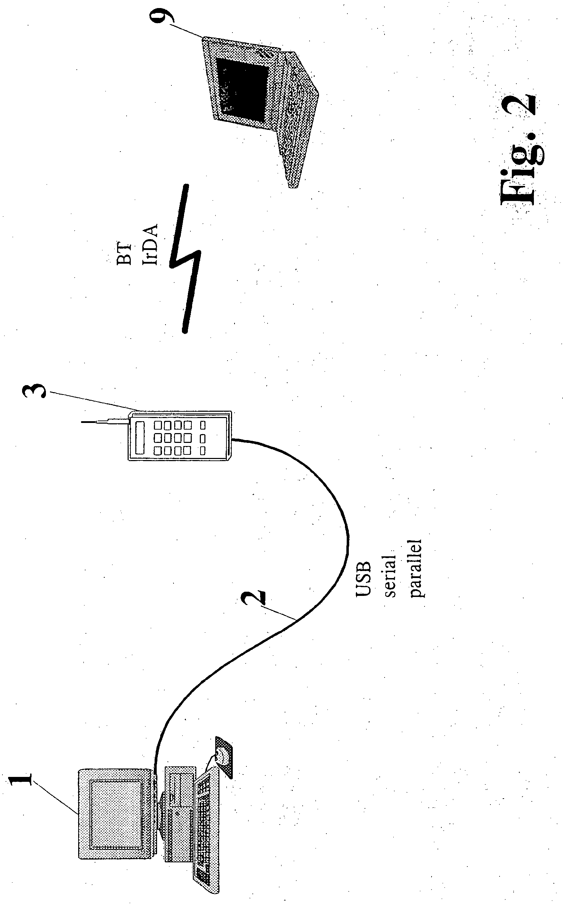

Fig. 2 shows a simplified block diagram for using the mobile terminal as a dongle between two different incompatible interfaces. Hereby, a first external device 1, which may be a PC, is connected to the mobile terminal 3 via a connection 2, which may be a serial, parallel or USB cable. Further, the mobile terminal 3 is able to send wireless signals, such as infrared or bluetooth signals, to a second external device 9, which in the present case is a laptop.

In the following, the transmission and processing of data between a first external device 1 with a port a and a second external device 9 with a port b using the mobile terminal 3 as an interface between the different external devices having incompatible ports a and b is explained considering as example the transmission of data between a USB port and a Bluetooth port. HCI commands are the input instructions for the HCI level 74 of the Bluetooth interface module 7 and can be sent over USB connections. If data from the first external device 1 are sent over the connection 2 to the USB connector 51, then the data comprise specific USB data, like the address of the device or the time stamp, and not specific USB data, in the present case HCI commands. The whole data package received by the USB connector 51 is submitted to the USB driver 52, which is responsible for the further processing of the data, upconverts the specific USB data to higher levels of USB and directs the not-specific USB data to the router 61. According to the commands received from the user interface 62 the router 61 directs the received data to the Bluetooth interface module 7 particularly to the HCI level 74 for further processing. The received data in the Bluetooth interface module 7 are either upconverted to higher levels of the Bluetooth interface module or after the processing in the HCI level 74 are sent as Bluetooth signals over the antenna 8 to a second external device 9 having a Bluetooth port. In the same way it is also possible to receive data from the second external device 9 via the antenna 8, to re-direct received and processed data to the router module 6 and further to the USB interface module 5 and then to the first external device 1.

Accordingly, the use of the mobile terminal 3 as interface between other incompatible ports like serial or infrared is possible. The invention is not limited to the transmission between Bluetooth and USB, but comprises every possible combination of interfaces implemented in the mobile terminal 3, as transmission between USB and serial, Bluetooth and serial, infrared and USB and so forth.

The mobile terminal 3 can therefore be used as an interface or dongle between different devices having incompatible port. Via the user interface 62 the user can select two interface modules out of the plurality of interface modules integrated in the mobile terminal 3. The user interface 62 will then submit the corresponding commands to the router 61 in order to redirect the data between the chosen interface modules.

## Claims

1. System of transmitting signals between different interfaces of a mobile terminal comprising
a first interface module (4; 5) for processing a first and a second type of signals,
a second interface module (7) for processing a third and said second type of signals, and **characterized in that** the system further comprises
a router module (6) with a router (61) for receiving signals of the second type from the first interface module (4; 5) or from the second interface module (7) and for transmitting signals of the second type to the second interface module (7) or to the first interface module (4; 5), the router being configured to direct the signals of the second type received from said first interface module (4; 5) or from said second interface module (7) according to commands received from a user interface means (62), and
that the second interface module (7) comprises a host controller interface HCI (74) for transmitting signals of the second type received from said router (61) as signals of the third type to a transmitting means (8) or for receiving signals of the third type from the transmitting means (8), said host controller interface HCI (74) being further configured for transmitting signals of the second type to the router (61) of the router module (6) or for receiving signals of the second type from the router (61) of the router module (6).

2. System according to claim 1,
**characterized in,**
**that** the first interface module (4; 5) comprises a connector (41; 51) serving as a port for transmitting signals of the first type to a first external device (1) or for receiving signals of the first type from the first external device (1).

3. System according to one of the claims 1 or 2,
**characterized in,**
**that** the first interface module (4; 5) comprises a driver (42; 52) for transmitting signals of the first type to the connector (41; 51) or for receiving signals of the first type from the connector (41; 51) and for transmitting signals of the second type to the router (61) of the router module (6) or for receiving signals of the second type from the router (61) of the router module (6).

4. System according to any of the claims 1 to 3,
**characterized in,**
**that** the second interface module (7) comprises the transmitting means (8) for transmitting signals of the third type to a second external device or for receiving signals of the third type from the second external device.

5. System according to any of the claims 1 to 4,
**characterized in,**
**that** the second interface module (7) is configured to process Bluetooth signals.

6. System according to any of the claims 1 to 5,
**characterized in,**
**that** the first interface module (4) is configured to process serial signals.

7. System according to any of the claims 1 to 5,
**characterized in,**
**that** the first interface module (4) is configured to process USB signals.

8. System according to any of the claims 1 to 5,
**characterized in,**
**that** the first interface module (4) is configured to process infrared signals.

9. System according to any of the claims 1 to 5,
**characterized in,**
**that** the first interface module (4) is configured to process parallel signals.

## Patentansprüche

1. System zur Übertragung von Signalen zwischen verschiedenen Schnittstellen eines mobilen Endgeräts, umfassend
ein erstes Schnittstellenmodul (4; 5), um einen ersten und einen zweiten Typ von Signalen zu verarbeiten,
ein zweites Schnittstellenmodul (7), um einen dritten und den zweiten Typ von Signalen zu verarbeiten, und
**dadurch gekennzeichnet,**
**dass** das System darüber hinaus umfasst
ein Routermodul (6) mit einem Router (61), um Signale des zweiten Typs von dem ersten Schnittstellenmodul (4; 5) oder von dem zweiten Schnittstellenmodul (7) zu empfangen und um Signale des zweiten Typs zu dem zweiten Schnittstellenmodul (7) oder zu dem ersten Schnittstellenmodul (4; 5) zu übertragen,
wobei der Router ausgestaltet ist, um die Signale des zweiten Typs, welche von dem ersten Schnittstellenmodul (4; 5) oder von dem zweiten Schnittstellenmodul (7) empfangen werden, entsprechend Befehlen, welche von Benutzer-Schnittstellenmitteln (62) empfangen werden, zu leiten, und
**dass** das zweite Schnittstellenmodul (7) eine Host-Steuerungsschnittstelle HCI (74) umfasst, um Signale des zweiten Typs, welche von dem Router (61) empfangen werden, als Signale des dritten Typs zu Übertragungsmitteln (8) zu übertragen, oder um Signale des dritten Typs von den Übertragungsmitteln (8) zu empfangen, wobei die Host-Steuerungsschnittstelle HCI (74) darüber hinaus ausgestaltet ist, um Signale des zweiten Typs zu dem Router (61) des Routermoduls (6) zu übertragen oder um Signale des zweiten Typs von dem Router (61) des Routermoduls (6) zu empfangen.

2. System nach Anspruch 1,
**dadurch gekennzeichnet,**
**dass** das erste Schnittstellenmodul (4; 5) einen Verbinder (41; 51) umfasst, welcher als ein Anschluss dient, um Signale des ersten Typs zu einer ersten externen Vorrichtung (1) zu übertragen oder um Signale des ersten Typs von der ersten externen Vorrichtung (1) zu empfangen.

3. System nach einem der Ansprüche 1 oder 2,
**dadurch gekennzeichnet,**
**dass** das erste Schnittstellenmodul (4; 5) einen Treiber (42; 52) umfasst, um Signale des ersten Typs zu dem Verbinder (41; 51) zu übertragen oder um Signale des ersten Typs von dem Verbinder (41; 51) zu empfangen und um Signale des zweiten Typs zu dem Router (61) des Routermoduls (6) zu übertragen oder um Signale des zweiten Typs von dem Router (61) des Routermoduls (6) zu empfangen.

4. System nach einem der Ansprüche 1 bis 3,
**dadurch gekennzeichnet,**
**dass** das zweite Schnittstellenmodul (7) die Übertragungsmittel (8) umfasst, um Signale des dritten Typs zu einer zweiten externen Vorrichtung zu übertragen oder um Signale des dritten Typs von der zweiten externen Vorrichtung zu empfangen.

5. System nach einem der Ansprüche 1 bis 4,
**dadurch gekennzeichnet,**
**dass** das zweite Schnittstellenmodul (7) ausgestaltet ist, um Bluetooth-Signale zu verarbeiten.

6. System nach einem der Ansprüche 1 bis 5,
**dadurch gekennzeichnet,**
**dass** das erste Schnittstellenmodul (4) ausgestaltet ist, um serielle Signale zu verarbeiten.

7. System nach einem der Ansprüche 1 bis 5,
**dadurch gekennzeichnet,**
**dass** das erste Schnittstellenmodul (4) ausgestaltet ist, um USB-Signale zu verarbeiten.

8. System nach einem der Ansprüche 1 bis 5,
**dadurch gekennzeichnet,**
**dass** das erste Schnittstellenmodul (4) ausgestaltet ist, um Infrarotsignale zu verarbeiten.

9. System nach einem der Ansprüche 1 bis 5,
**dadurch gekennzeichnet,**
**dass** das erste Schnittstellenmodul (4) ausgestaltet ist, um parallele Signale zu verarbeiten.

## Revendications

1. Système de transmission de signaux entre différentes interfaces d'un terminal mobile, comprenant :
un premier module d'interface (4 ; 5) destiné à traiter un premier et un deuxième type de signaux ;
un deuxième module d'interface (7) destiné à traiter un troisième et ledit deuxième type de signaux ;
**caractérisé en ce que** le système comprend en outre :
un module de routage (6) avec un routeur (61) destiné à recevoir des signaux du deuxième type provenant du premier module d'interface (4 ; 5) ou du deuxième module d'interface (7) et à transmettre des signaux du deuxième type au deuxième module d'interface (7) ou au premier module d'interface (4 ; 5) ;
le routeur étant configuré pour envoyer les signaux du deuxième type reçus dudit premier module d'interface (4 ; 5) ou dudit deuxième module d'interface (7) en fonction d'instructions reçues d'un moyen d'interface utilisateur (62) ; et
**en ce que** le deuxième module d'interface (7) comprend une interface de contrôleur hôte HCI (74) destinée à transmettre des signaux du deuxième type reçus dudit routeur (61) sous la forme de signaux du troisième type vers un moyen de transmission (8) ou à recevoir des signaux du troisième type provenant du moyen de transmission (8), ladite interface de contrôleur hôte HCI (74) étant en outre configurée pour transmettre des signaux du deuxième type vers le routeur (61) du module de routage (6) ou pour recevoir des signaux du deuxième type provenant du routeur (61) du module de routage (6).

2. Système selon la revendication 1,
**caractérisé en ce que**
le premier module d'interface (4 ; 5) comprend un connecteur (41 ; 51) servant de port pour transmettre des signaux du premier type à un premier dispositif externe (1) ou pour recevoir des signaux du premier type provenant du premier dispositif externe (1).

3. Système selon l'une des revendications 1 et 2, **caractérisé en ce que**
le premier module d'interface (4 ; 5) comprend un pilote (42 ; 52) destiné à transmettre des signaux du premier type vers le connecteur (41 ; 51) ou à recevoir des signaux du premier type provenant du connecteur (41 ; 51) et à transmettre des signaux du deuxième type au routeur (61) du module de routage (6) ou à recevoir des signaux du deuxième type provenant du routeur (61) du module de routage (6).

4. Système selon l'une quelconque des revendications 1 à 3,
**caractérisé en ce que**
le deuxième module d'interface (7) comprend le moyen de transmission (8) pour transmettre des signaux du troisième type vers un second dispositif externe ou pour recevoir des signaux du troisième type en provenance du second dispositif externe.

5. Système selon l'une quelconque des revendications 1 à 4,
**caractérisé en ce que**
le deuxième module d'interface (7) est configuré pour traiter des signaux Bluetooth.

6. Système selon l'une quelconque des revendications 1 à 5,
**caractérisé en ce que**
le premier module d'interface (4) est configuré pour traiter des signaux en série.

7. Système selon l'une quelconque des revendications 1 à 5,
**caractérisé en ce que**
le premier module d'interface (4) est configuré pour traiter des signaux USB.

8. Système selon l'une quelconque des revendications 1 à 5,
**caractérisé en ce que**
le premier module d'interface (4) est configuré pour traiter des signaux infrarouges.

9. Système selon l'une quelconque des revendications 1 à 5,
**caractérisé en ce que**
le premier module d'interface (4) est configuré pour traiter des signaux parallèles.
